# EUROPEAN PATENT APPLICATION

(11) **EP 2 439 705 A1**
(43) Date of publication of application: **11.04.2012**
(21) Application number: 10783012.7
(22) Date of filing: 05.05.2010
(51) Int. Cl.: G07F 7/08, H04K 1/00

(54) **SYSTEM FOR COMMUNICATING WITH SMART CARDS PROVIDED WITH STORAGE AND/OR PROCESSING FUNCTIONS AND CARD READER FOR SAID SYSTEM**

(30) Priority: 02.06.2009 ES 200930248
(71) Applicant: Micro Códigos, S. L., 08960 Sant Just Desvern (ES)
(72) Inventor: MONÉS MENDOZA, Francisco Javier, E-08960 Sant Just Desvern (ES)
(74) Representative: Ponti Sales, Adelaida
(86) International application number: PCT/ES2010/070300
(87) International publication number: WO 2010/139830

(57) **Abstract**

The invention proposes a system for communication with smart cards provided with storage and/or processing functions, which comprises a smart card reader, said system hosting at least one proxy which is configured to activate a warning signal when one or several functions of the smart card are used or are going to be used. Thus, each time a function of the smart card is going to be used, the user can instantly be aware of it, avoiding fraudulent signatures or transactions.

## Description

The present invention relates to a system for communication with smart cards provided with storage and/or processing functions and a card reader adapted for said system.

### BACKGROUND OF THE INVENTION

Systems for communication with smart cards provided with storage and/or processing functions, which include a smart card reader, are widely known.

These systems are adapted to carry out writing to a file, withdrawals in a wallet, signing or encryption with a private key, deleting any file or life phase changes.

To do this such systems host, for example in the reader, at least a proxy that eventually manages public and/or private keys stored in the smart card.

At the time of carrying out one of the operations listed above, the card can be required to perform any function K, as for example using a private key to do an electronic signature.

In the majority of processes of this type, just before performing each signature, the system prompts the person signing to identify himself by using a personal key or *"password",* such as a PIN.

In this way, at the time of a signature or a transaction, such a person authorizes the operation and is aware that he is authorizing it.

However, in other systems the authorization is performed only once, allowing multiple processes later that involve the use of the private keys stored on the card.

Therefore, in this type of systems, there is the possibility of the system being manipulated by a third party once the authorization has been granted, and may perform fraudulent signatures or transaction operations.

This implies an inadmissible security flaw that can have harmful consequences for the user.

Therefore, the need for a system that provides a solution to the above-mentioned drawback of the state of the art is evident, i.e. to provide security for the smart card user in situations such as the ones mentioned above.

### DESCRIPTION OF THE INVENTION

To this end, the invention proposes a system for communication with smart cards provided with storage and/or processing functions, which comprises a smart card reader, said system hosting at least one proxy, **characterized in that** the proxy is configured to activate a warning signal when one or several functions of the smart card are used or are going to be used.

In this way, each time a function of the smart card is going to be used, the user can instantly be aware of it.

Therefore, if at that time the user is not using any of the smart card functions, he will have immediate knowledge that this function, for example an electronic signature, is going to take place without his consent and may be able to interrupt the process.

According to other optional features of the invention:
- The proxy is hosted in the reader itself.
- The proxy detects the creation of an electronic signature in a smart card.
- The warning signal activates a sound, light indicator, a notice on a screen, a message or a registry.
- Said beeping and/or luminous indicator is integrated in the reader itself.
- Comprises means to interrupt the use of one or several smart card characteristics at any time.
- Said means to interrupt the use of one or several smart card functions at any time, include a push-button, a power switch, or switch in the reader.
- The card functions can be: writing in a file, withdrawals in a wallet, signing or encryption with a private key, deleting any file or life phase changes.

Also, the invention refers to a smart card reader for a communication system with smart cards provided with storage and/or processing functions, said smart card reader comprising, at least one proxy, **characterized in that** the proxy is configured to activate a warning signal when one or several functions of the smart card are used or are going to be used.

Preferably, the warning signal activates a sound or light indicator, a notice on a screen, a message or a registry integrated in the reader itself.

Therefore, the reader itself includes the new features and inventiveness of the invention.

### SHORT DESCRIPTION OF THE DRAWINGS

For a better understanding of the above mentioned some drawings are attached, in which schematically and only as way of example but not limited to, an embodiment is represented.
Figure 1 shows a perspective view of the smart card reader object of the invention.
Figure 2 is a diagram of a typical smart card.
Figures 3 and 4 are two methods that can be carried out with the system and/or the reader of the invention.

### DESCRIPTION OF A PREFERRED EMBODIMENT

The invention relates to a system for communication with smart cards 1 provided with storage and/or processing functions K, which comprises a smart card 1 reader 2, hosting said system at least one proxy.

Specifically, according to the invention, the proxy is configured to activate a warning signal when one or several functions K of the smart card 1 are used or going to be used, such as writing to a file, withdrawals in a wallet, signing or encryption with private key, deleting any file, life phase changes or other critical functions for the user of the card.

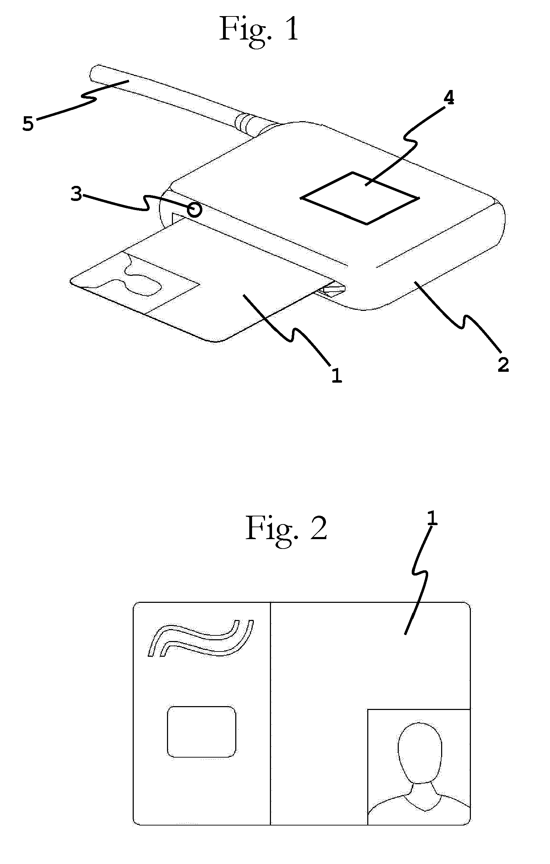

As illustrated in figure 1, according to a preferred embodiment, the proxy is hosted in the reader itself 2, which comprises a connection cable 5 to a computer.

As a preferred use, the proxy detects the creation of an electronic signature using data stored in the smart card 1.

The warning signal activates a sound or light indicator 3, a notice on a screen, a message or a registry as shown in the figure.

To facilitate the interruption of any of the features of the card mentioned above, the system includes, preferably in the reader, means 4 to interrupt the use of one or several characteristics K of the smart card 1, at any time. These means may preferably be a push-button, a power switch or switch in the reader 2 or an assigned key in the keyboard.

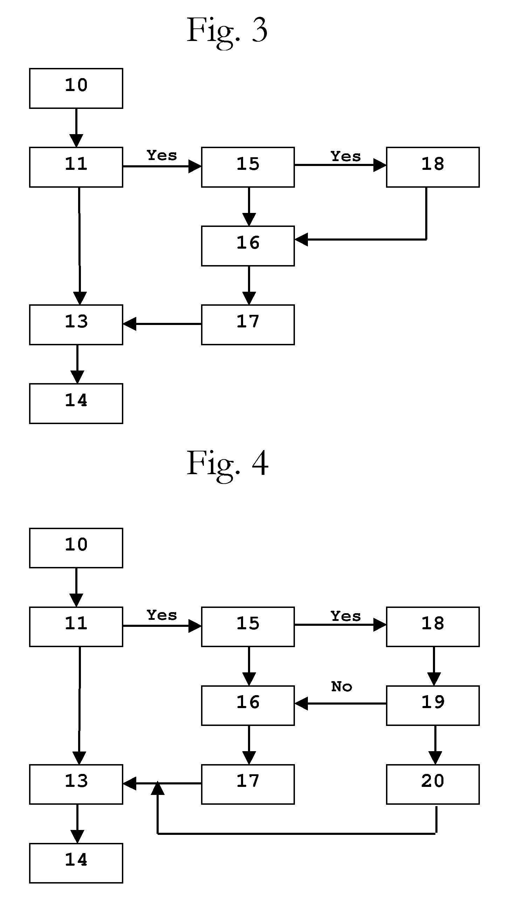

Subsequently, from the flow charts represented in figures 3 and 4, the procedures that can be carried out by the system and the reader of the invention, are described.

As shown in the flowchart of figure 3, the system of the invention operates as follows:
In the initial phase 10, the system is in stand-by until it receives a transmission command 11.

Then, in stage 15, it is asked if the transmission command 11 is a digital signature command in APDU or TPDU format.

If that is the case, a notification signal stating that it is a signature command is emitted 18 and a warning is activated, preferably a light indicator. If that is not the case, it proceeds directly to stage 16 sending the command to the card.

Due to the high speed at which signature operations are carried out, and according to a preferred embodiment of the system, this is configured in stage 18 to wait a few seconds, for example five, at the same time as the warning signal is issued, before proceeding to stage 16 sending the command to the smart card, in which the electronic signature command is processed.

Subsequently, the response is sent to the reader (i.e., the electronic signature) in stage 17, so that this sends it to the subsystem (for example a PC), in stage 13, to finally move to the stand-by stage 14.

According to the method described above with reference to figure 3, during the five seconds of stand-by, if the user wants to interrupt the electronic signature process, he can extract the card from reader.

However, according to another embodiment of the invention, the system can be implemented alternating block 19 between blocks 18 and 16, in which the system is asked if the user has activated a digital signature freezing command.

If the response is that there is no freezing command, the system continues as in the previous case.

Otherwise, an error message is emitted, stage represented by block 20, and the signature is not carried out, returning to the stand-by stage.

## Claims

1. System for communication with smart cards(1) provided with storage and/or processing functions (K), which comprises a smart card (1) reader (2), said system hosting at least one proxy, **characterized in that** the proxy is configured to activate a warning signal when one or several functions (K) of the smart card (1) are used or are going to be used.

2. System according to claim 1, wherein the proxy is hosted in the reader itself (2).

3. System according to the previous claim, wherein the proxy detects the creation of an electronic signature in a smart card (1).

4. System according to any of the previous claims, wherein the warning signal activates a sound, light indicator (3), a notice on a screen, a message or a registry.

5. System according to the previous claim, wherein the sound and/or light indicator (3) is integrated in the reader (2).

6. System according to any of the previous claims, which comprises means (4) to interrupt the use of one or several characteristics (K) of the smart card (1) at any time.

7. System according to the previous claim, wherein said means (4) to interrupt at any time the use of one or several functions (K) of the smart card (1) comprise a push-button, a power switch, or a switch in the reader itself (2).

8. System according to any of the previous claims, wherein the card functions can be: writing to a file, withdrawals in a wallet, signing or encryption with a private key, deleting any file or life phase changes.

9. Smart card reader (2) for a communication system with smart cards(1) provided with storage and/or processing functions (K), said smart card (1) reader (2) comprising at least one proxy, **characterized in that** the proxy is configured to activate a warning signal when one or several functions (K) of the smart card (1) are used or are going to be used.

10. Reader according to the previous claim, wherein the warning signal activates a sound or light indicator (3), a notice on a screen, a message or a registry integrated in the reader itself (2).
